(19) Europäisches Patentamt
European Patent Office
Office européen des brevets

(11) EP 0 519 236 B1

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.$^6$: **C08F 10/00**, C08F 4/622

(21) Anmeldenummer: **92108887.8**

(22) Anmeldetag: **27.05.1992**

(54) **Durch Vorpolymerisation geträgerte Katalysatorsysteme zur Herstellung von Polyalk-1-enen**

Prepolymerized catalyst systems on carrier for preparation of poly-1-alkenes

Catalyseurs prépolymérisés et supportés pour préparation de poly-1-alcènes

(84) Benannte Vertragsstaaten:
**BE DE ES FR GB IT NL**

(30) Priorität: **18.06.1991 DE 4120006**

(43) Veröffentlichungstag der Anmeldung:
**23.12.1992 Patentblatt 1992/52**

(73) Patentinhaber: **BASF Aktiengesellschaft**
**D-67063 Ludwigshafen (DE)**

(72) Erfinder:
- **Rieger, Bernhard, Dr.**
  **W-7401 Nehren (DE)**
- **Schlund, Rueger, Dr.**
  **W-6800 Mannheim 1 (DE)**
- **Konrad, Rainer, Dr.**
  **W-6701 Goennheim (DE)**
- **Evertz, Kaspar, Dr.**
  **W-6707 Schifferstadt (DE)**

(56) Entgegenhaltungen:
**EP-A- 0 327 649** **EP-A- 0 354 893**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 519 236 B1

Printed by Jouve, 75001 PARIS (FR)

## Beschreibung

Die vorliegende Erfindung betrifft Katalysatorsysteme zur Polymerisation von $C_2$- bis $C_{10}$-Alk-1-enen enthaltend als aktive Bestandteile Metallocenkomplexe von Metallen der IV. und V. Nebengruppe des Periodensystems und eine oligomere Aluminiumoxidverbindung, erhältlich durch Vermischen eines oder mehrerer Metallocenkomplexe von Metallen der IV. und V. Nebengruppe des Periodensystems mit einer Lösung der oligomeren Aluminiumoxidverbindung in einem inerten Kohlenwasserstoff für einen Zeitraum von 5 bis 120 Minuten, anschließende Ausfällung des so aktivierten Katalysatorsystems mit Hilfe eines inerten, flüssigen Kohlenwasserstoffs, welcher zusätzlich einen Viskositätsverbesserer enthält, unter Erhalt einer Suspension und anschließende Trägerung der so erhältlichen Katalysatorsysteme durch kurzzeitige Vorpolymerisation eines $C_2$- bis $C_{10}$-Alk-1-ens bei Temperaturen von -60 bis 20°C.

Außerdem betrifft die vorliegende Erfindung ein Verfahren zur Herstellung der erfindungsgemäßen Katalysatorsysteme, deren Verwendung zur Herstellung von Polyalk-1-enen, sowie ein Verfahren zur Herstellung von Polyalk-1-enen mit Hilfe dieser Katalysatorsysteme.

Für die Polymerisation von Alk-1-enen können neben den unlöslichen Ziegler-Natta-Katalysatoren auch lösliche Katalysatorsysteme verwendet werden. Bei letzteren handelt es sich um Metallocenkomplexe von Metallen der IV. und V. Nebengruppe des Periodensystems mit organischen Liganden, die in Verbindung mit oligomeren Aluminiumoxidverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall π-Bindungen eingehen. Häufig werden als Katalysatoren auch solche Übergangsmetallkomplexe verwendet, die neben organischen Liganden noch an das Metallatom gebundene Halogene aufweisen.

Lösliche Katalysatorsysteme aus Metallocenkomplexen und oligomeren Aluminiumoxidverbindungen bieten gegenüber den bisher bekannten Ziegler-Natta-Katalysatoren einige Vorteile, beispielsweise eine erhöhte Produktivität. Weiterhin besteht bei ihnen die Möglichkeit, die Eigenschaften der Polymerisate, insbesondere deren Molmassen, Molmassenverteilung; Stereospezifität sowie deren Copolymerisationsverhalten durch die Verwendung speziell substituierter Metallocenkomplexe gezielt verändern zu können. Diese Vorteile sind jedoch in der Regel nur dann gegeben, wenn die Polymerisation in einer Lösung durchgeführt wird. Bei einer Lösungspolymerisation sind die Polymerisate erst durch Ausfällung aus dem Lösungsmittel zugänglich. Dies führt bei den daraus erhaltenen Polymerisaten zu sehr niedrigen Schüttdichten, was zusammen mit dem hohen Feinstaubanteil die Weiterverarbeitung erschwert. Bei der Gasphasenpolymerisation wiederum lassen sich lösliche Katalysatorsysteme ebenfalls nicht wirkungsvoll einsetzen, da diese ein festes Katalysatorsystem erfordert, das nach seiner Herstellung isoliert werden kann und für einen gewissen Zeitraum auch stabil bleiben soll.

In den Offenlegungsschriften EP-A 285 443, EP-A 294 942, EP-A 323 716 und EP-A 368 644 wurde versucht, diese Nachteile der Metallocenkomplexe enthaltenden Katalysatorsysteme durch Trägerung auf Oxide, insbesondere auf Siliciumdioxid zu beseitigen. Derartig geträgerte Katalysatorsysteme weisen aber eine deutliche abgesenkte Produktivität auf.

Weiterhin sind aus der EP-A 279 863 und der EP-A 295 312 Katalysatorsysteme zur Polymerisation von Alk-1-enen bekannt, die aus einer Komplexverbindung von Metallen der IV. und V. Nebengruppe des Periodensystems, einer oligomeren Aluminiumoxidverbindung und einem anorganischen oder organischen Träger, beispielsweise Siliciumdioxid oder einem Polyolefin, bestehen. Bei der Herstellung dieses Katalysatorsystems werden die aktiven Bestandteile und der Träger zuerst zusammen ausgefällt und als Feststoff isoliert und anschließend noch vor der eigentlichen Polymerisation einem zusätzlichen Vorpolymerisationsschritt unterworfen. Die mit Hilfe dieses relativ aufwendigen Verfahrens erhaltenen Katalysatorsysteme sind zur Herstellung von Polyethylenen mit geringen Feinstaubanteilen geeignet. Aufgrund ihrer relativ geringen Produktivität sind sie jedoch gegenüber Katalysatorsystemen des Ziegler-Natta-Typs nicht konkurenzfähig.

Nach einem anderen, in der EP-A 354 893 beschriebenen Verfahren zur Herstellung eines Polymerisationskatalysators werden ein Metallocenkomplex von Metallen der IV. und V. Nebengruppe des Periodensystems und eine oligomere Aluminiumoxidverbindung zunächst durch einen Vorpolymerisationsschritt mit Polyolefinen in Kontakt gebracht. Das dabei erhaltene Katalysatorsystem wird anschließend nicht isoliert, sondern unmittelbar nach seiner Herstellung noch im gleichen Reaktor weiterverwendet, d.h. als Katalysator zur Polymerisation von Alk-1-enen eingesetzt. Da aus verfahrenstechnischen Gründen Katalysatorsysteme zur Gasphasenpolymerisation von Alk-1-enen isolierbar und in der Regel auch lagerungsfähig sein sollten, ist das aus der EP-A 354 893 bekannte Katalysatorsystem im wesentlichen auf Lösungspolymerisationen beschränkt.

Der vorliegenden Erfindung lag daher die Aufgabe zugrunde, den geschilderten Nachteilen abzuhelfen und ein Katalysatorsystem zu entwickeln, welches isolierbar und lagerungsfähig ist, sich sowohl für die Lösungspolymerisation als auch für die Gasphasenpolymerisation eignet und eine möglichst hohe Produktivität aufweist.

Demgemäß wurden die eingangs definierten neuen Katalysatorsysteme gefunden.

Die erfindungsgemäßen, geträgerten Katalysatorsysteme enthalten als aktive Bestandteile u.a. eine oder mehrere Komplexverbindungen von Metallen der IV. und V. Nebengruppe des Periodensystems, insbesondere von Titan, Zirkonium, Hafnium oder Vanadium. Vorzugsweise werden dabei solche Komplexverbindungen verwendet, bei denen das Metallatom über π-Bindungen mit ungesättigten cyclischen Kohlenwasserstoffgruppen verbunden ist, beispielsweise Cyclopentadienyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom, Jod oder einem $C_1$- bis $C_8$-Alkyl, beispielsweise einer Methyl-, Ethyl-, Propyl- oder Butylgruppe, verknüpft sein kann. Besonders geeignete Komplexverbindungen enthalten dabei insbesondere Chlor oder Brom.

Die für das erfindungsgemäße Katalysatorsystem besonders geeigneten Komplexverbindungen lassen sich durch die folgende Formel I kennzeichnen:

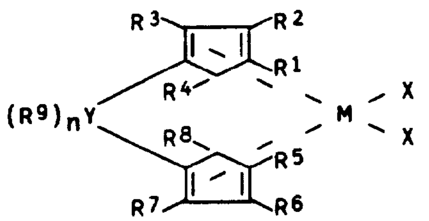

(I)

in der die Substituenten folgende Bedeutung haben:

| | |
|---|---|
| $R^1$ bis $R^3$, $R^5$ bis $R^7$ | Wasserstoff, $C_1$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl, wobei gegebenenfalls auch zwei benachbarte Reste $R^1$ und $R^2$, $R^2$ und $R^3$, $R^5$ und R6 oder $R^6$ und $R^7$ gemeinsam für ungesättigte, 4 bis 15 C-Atome aufweisende, cyclische Gruppen stehen können, |
| $R^4$, $R^8$ | Wasserstoff, $C_1$- bis $C_4$-Alkyl, |
| $R^9$ | $C_1$- bis $C_8$-Alkyl, |
| M | Titan, Zirkonium, Hafnium, Vanadium, |
| Y | Silicium, Germanium, Zinn, Schwefel, Kohlenstoff |
| X | Fluor, Chlor, Brom, Jod oder $C_1$- bis $C_8$-Alkyl |

und n für die Zahlen 0, 1 oder 2, insbesondere für 2 steht.

Beispiele für besonders geeignete Komplexverbindungen sind u.a.

Dimethylsilandiylbis(-3-tert.butyl-5-methylcyclopentadienyl)-zirkoniumdichlorid,
Diethylsilandiylbis(-3-tert.butyl-5-methylcyclopentadienyl)-zirkoniumdichlorid,
Methylethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid
Dimethylsilandiylbis(-3-tert.pentyl-5-methylcyclopentadienyl)-zirkoniumdichlorid
Dimethylsilandiylbis(-3-tert.butyl-5-methylcyclopentadienyl)-dimethylzirkonium,
Dimethylsilandiylbis(-2-methylindenyl)-zirkoniumdichlorid,
Diethylsilandiylbis(-2-methylindenyl)-zirkoniumdichlorid,
Dimethylsilandiylbis(-2-ethylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Oimethylsilandiylbis(-2-methyl-5-methylcyclopentadienyl)-zirkoniumdichlorid,
Dimethylsilandiylbis(-2-methyl-5-ethylcyclopentadlenyl)-zirkoniumdichlorid,
Dimethylsilandiylbis(-2-ethyl-5-isopropylcyclopentadienyl)-zirkoniumdichlorid,
Dimethylsilandiylbis(-2-methylindanyl)-zirkoniumdichlorid,
Dimethylsilandlylbis(-2-Dimethylsilandiylbis(-2-methylbenzindenyl)-zirkoniumdichlorid und
Dimethylsilandiylbis(-2-methylindenyl)-hafniumdichlorid.

Besonders geeignete Komplexverbindungen sind ferner unverbrückte Komplexverbindungen von Metallen der IV. und V. Nebengruppe des Periodensystems mit Cyclopentadienyl- oder Indenylgruppen, beispielsweise Diindenylzirkoniumdichlorid, Dicyclopentadienylzirkoniumdichlorid, Dicyclopentadienylzirkoniumdibromid, Dimethylcyclopentadienylzirkoniumdichlorid oder Dicyclopentadienylhafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium oder Vanadium bevorzugt ist. Beispiele für entsprechende Herstellungsverfahren sind u.a. im Journal of Organometallic Chemistry, 369 (1989), 359-370 beschrieben.

Neben der Komplexverbindung enthält das erfindungsgemäße Katalysatorsystem noch oligomere Aluminiumoxidverbindungen üblicherweise mit der allgemeinen Formel II oder III

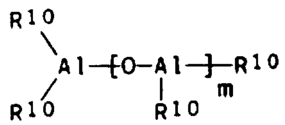 (II) 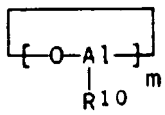 (III)

wobei $R^{10}$ bevorzugt für Methyl- oder Ethylgruppen und m bevorzugt für eine Zahl von 10 bis 25 steht. Derartige oligomere Aluminiumoxidverbindungen werden auch Alumoxane genannt.

Die Herstellung dieser oligomeren Aluminiumoxidverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen Aluminiumoxidverbindungen als Gemische unterschiedlich langer, sowohl linearer als auch cyclischer Kettenmoleküle vor, so daß m als Mittelwert anzusehen ist. Die Aluminiumoxidverbindung kann in kleineren Mengen noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Bei der Polymerisation von $C_2$- bis $C_{10}$-Alk-1-enen mit Hilfe des erfindungsgemäßen Katalysatorsystems ist es vorteilhaft, die Komplexverbindung von Metallen der IV. und V. Nebengruppe des Periodensystems und die oligomere Aluminiumoxidverbindung in solchen Mengen zu verwenden, daß das atomare Verhältnis zwischen Aluminium aus der oligomeren Aluminiumoxidverbindung und dem Übergangsmetall aus der Komplexverbindung von Metallen der IV. und V. Nebengruppe des Periodensystems im Bereich von 10:1 bis $10^5$:1, insbesondere im Bereich von 102:1 bis 104:1 liegt.

Bei der Herstellung des erfindungsgemäßen Katalysatorsystems werden zunächst ein oder mehrere Metallocenkomplexe von Metallen der IV. oder V. Nebengruppe des Periodensystems mit einer Lösung der oligomeren Aluminiumoxidverbindung in einem inerten Kohlenwasserstoff, vorzugsweise unter Rühren, miteinander vereinigt, wodurch sich ein aktiviertes Katalysatorsystem bildet. Die Dauer dieses Aktivierungsschrittes beträgt dabei 5 bis 120 Minuten, vorzugsweise 10 bis 60 Minuten. Die Vermischung wird bevorzugt in der Weise durchgeführt, daß man die Komplexverbindung mit einer Lösung der oligomeren Aluminiumoxidverbindung in einem inerten Kohlenwasserstoff, beispielsweise in Benzol, Toluol, Hexan oder Heptan, bei Temperaturen von 10 bis 50°C in Kontakt bringt.

Anschließend wird das dadurch aktivierte Katalysatorsystem durch Ausfällung mit Hilfe eines inerten, flüssigen Kohlenwasserstoffs, welcher zusätzlich einen Viskositätsverbesserer enthält, in eine Suspension übergeführt. Der Vorgang des Ausfällens erfolgt dabei vorzugsweise unter Rühren, wobei der inerte, flüssige Kohlenwasserstoff auf eine Temperatur von -50°C bis 80°C, bevorzugt auf eine Temperatur von -40°C bis 40°C, eingestellt wird. Als inerte, flüssige Kohlenwasserstoffe werden dabei insbesondere die bei Raumtemperatur flüssigen $C_5$- bis $C_{12}$-Alkane verwendet, wobei Hexan und Heptan besonders bevorzugt sind. Üblicherweise wird der inerte, flüssige Kohlenwasserstoff im wenigstens 2-fachen, vorzugsweise im wenigstens 4-fachen mengenmäßigen Überschuß, bezogen auf ml, im Vergleich zur Lösung des aktivierten Katalysatorsystems eingesetzt. Als Viskositätsverbesserer werden dabei die in der Technik üblichen Stoffe verwendet, die eine Erhöhung der Viskosität einer Lösung, Suspension oder Emulsion bewirken, insbesondere Polymerisate wie Polyolefine oder Polystyrol. Als besonders geeigneter Viskositätsverbesserer wird bevorzugt Polyisobutylen verwendet. Durch die Menge des Viskositätsverbesserers läßt sich außerdem die Partikelgröße des Katalysators beeinflussen. Vorzugsweise enthält die Suspension etwa 5 bis 40 Vol-% des Viskositätsverbesserers.

Nach dem Ausfällungsschritt wird das in einer Suspension vorliegende Katalysatorsystem durch kurzzeitige Vorpolymerisation eines C2- bis $C_{10}$-Alk-1-ens bei Temperaturen von -60 bis 20°C geträgert. Zur Vorpolymerisation werden dabei insbesondere C2- bis C6-Alk-1-ene, wie beispielsweise Ethylen, Propylen, But-1-en, Pent-1-en oder Hex-1-en oder ein Gemisch aus diesen $C_2$- bis $C_6$-Alk-1-enen verwendet, wobei Ethylen und Propylen bevorzugt sind. Bei der Vorpolymerisation werden der, aus dem Ausfällungsschritt erhältlichen Suspension zunächst ein Gemisch aus einem oder mehreren $C_2$- bis $C_{10}$-Alk-1-enen und gegebenenfalls einem Verdünnungsmittel, beispielsweise einem flüssigen Kohlenwasserstoff oder Argon hinzugefügt, wobei das Verdünnungsmittel in diesem Gemisch im bis zu 100-fachen Überschuß vorliegen kann. Die anschließend in dieser Suspension durchgeführte Polymerisation erfolgt bei einer Temperatur von -60 bis 20°C, insbesondere von -50 bis 0°C und einem bevorzugten Druck von 0,1 bis 20 bar, insbesondere von 0,5 bis 10 bar. Die Polymerisation wird üblicherweise so lange durchgeführt, bis das Masseverhältnis zwischen dem in der Suspension vorliegenden Katalysatorsystem und dem bei der Vorpolymerisation erhältlichen Polymerisat im Bereich von 1:2 bis 1:20, vorzugsweise im Bereich von 1:4 bis 1:15, liegt. Dazu benötigt man in der Regel etwa 5 bis 60 Minuten.

Auf diese Weise erhält man ein aktives Katalysatorsystem, das insbesondere in Form einer Suspension in einem inerten, flüssigen Kohlenwasserstoff, beispielsweise in Hexan oder in Heptan lagerungsfähig ist.

Mit Hilfe dieser isolierbaren geträgerten Katalysatorsysteme lassen sich Polymerisate von Alk-1-enen herstellen. Darunter werden Homo- und Copolymerisate von $C_2$- bis $C_{10}$-Alk-1-enen verstanden, wobei als Monomere vorzugsweise Ethylen, Propylen, But-1-en, Pent-1-en und Hex-1-en verwendet werden. Die erfindungsgemäßen Katalysatorsysteme eignen sich insbesondere zur Herstellung von Polyethylen und von Copolymerisaten des Ethylens mit untergeordneten Anteilen anderer $C_3$- bis $C_{10}$-Alk-1-ene, vorzugsweise von Propylen und But-1-en.

Die Herstellung dieser Polymerisate kann in den üblichen, für die Polymerisation von Alk-1-enen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisation wird bei Drücken von 0,1 bis 100 bar und Temperaturen von -20 bis 150°C durchgeführt. Bevorzugt sind dabei Drücke von 1 bis 80 bar und Temperaturen von +20 bis +100°C. Die Polymerisationszeit beträgt üblicherweise 0,5 bis 10 Stunden.

Polymerisationsreaktionen mit Hilfe der erfindungsgemäßen Katalysatorsysteme lassen sich in der Gasphase, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. In diesem Fall ist es vorteilhaft, wenn man pro Liter des Lösungsmittels $10^{-4}$ bis $10^{-1}$ mol Aluminium als oligomere Aluminiumoxidverbindungen verwendet. Polymerisate mit guten anwendungstechnischen Eigenschaften sind auch bei der Polymerisation in der Gasphase und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Weiterhin ist es möglich, bei der Polymerisation neben dem erfindungsgemäßen geträgerten Katalysatorsystem aus der oder den Komplexverbindungen und der oligomeren Aluminiumoxidverbindung noch weiteres oligomeres Aluminiumoxid in Form einer Lösung in einem inerten Kohlenwasserstoff, beispielsweise in Heptan, zu verwenden. Auch in diesem Fall kann die oligomere Aluminiumoxidverbindung in kleineren Mengen noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Die mit Hilfe des erfindungsgemäßen Katalysatorsystems hergestellten Polymerisate zeichnen sich durch einen relativ hohe Molmasse und eine enge Molmassenverteilung Q aus. Unter der Molmassenverteilung Q versteht man dabei das Verhältnis zwischen dem Gewichtsmittel der Molmasse ($\overline{M}_w$) und dem Zahlenmittel der Molmasse ($\overline{M}_n$). Weiterhin zeichnen sich die aus den erfindungsgemäßen Katalysatorsystemen erhältlichen Polymerisate durch eine enge Korngrößenverteilung aus. Die erfindungsgemäßen Katalysatorsysteme können sowohl in Form einer Suspension, als auch in fester Form über mehrere Monate hinweg gelagert werden und eignen sich deshalb auch für die Gasphasenpolymerisation. Ihre Produktivitäten sind sehr hoch.

Die mit Hilfe des erfindungsgemäßen Katalysatorsystems erhältlichen Polyalk-1-ene eignen sich insbesondere zur Herstellung von Folien und Formkörpern.

Beispiele 1 - 5

A. Voraktivierung

54 mg (0,155 mol) Dicyclopentadienylzirkoniumdichlorid wurden in einem 0,1 l Glaskolben zu einer 1,6 molaren Lösung von 4,6 g Methylalumoxan (durchschnittliche Kettenlänge m = 20) in 46 ml Toluol gegeben. Die beiden Katalysatorkomponenten wurden anschließend 20 Minuten lang bei 20°C gerührt. Das atomare Verhältnis zwischen Aluminium und Zirkonium in der dabei erhaltenen, aktivierten Katalysatorlösung ist für alle Beispiele 1 - 5 in der nachfolgenden Tabelle 1 wiedergegeben.

B. Überführung in eine Suspension

Die aus dem Voraktivierungsschritt erhaltene Lösung wurde anschließend bei -40°C unter Rühren zu 250 ml Heptan zugetropft, dem vorher Polyisobutylen zur Viskositätserhöhung zugegeben wurde. Das Polyisobutylen (Oppanol® B 200 mit einer Molmasse $\overline{M}_v$ (Viskositätsmittel) von 4500000) wurde dabei in Form einer Lösung von 24 g Polyisobutylen in 1 Liter Heptan verwendet. Die jeweilige Menge der hinzugefügten Polyisobutylenlösung kann für alle Beispiele 1 - 5 der nachfolgenden Tabelle 1 entnommen werden.

Man erhielt dabei eine schwach gelb gefärbte Suspension des aktivierten Katalysatorsystems in Heptan.

C. Vorpolymerisation

In die Suspension des aktivierten Katalysatorsystems wurde danach bei einem Druck von 1 bar Ethylen eingeleitet und dieses 10 Minuten lang polymerisiert. Das erhaltene Vorpolymerisat wurde von der Suspension abgefrittet, zweimal mit Heptan gewaschen und anschließend erneut in 20 ml Heptan suspendiert.

Die jeweiligen Polymerisationstemperaturen sind zusammen mit der Menge des dabei erhaltenen Gemisches aus Vorpolymerisat und Katalysatorbestandteilen, dem atomaren Verhältnis zwischen Aluminium aus der oligomeren Aluminiumoxidverbindung und dem Zirkonium aus der Komplexverbindung, den jeweiligen Anteilen von Aluminium und Zirkonium im erhaltenen Gemisch und der Partikalgröße dieses Gemisches für alle Beispiele 1 - 5 der nachfolgenden Tabelle 1 zu entnehmen.

Tabelle 1

| | Beispiele 1 | 2 | 3 | 4 | 5 |
|---|---|---|---|---|---|
| Atomares Verhältnis Aluminium: Zirkonium nach der Voraktivierung A | 500 | 2000 | 6000 | 2000 | 2000 |
| Menge der im Schritt B hinzugefügten Lösung von Polyisobutylen in Heptan [ml] | 30 | 30 | 30 | 30 | 60 |
| Temperatur bei der Vorpolymerisation C [°C] | -40 | -40 | -40 | -10 | -40 |
| Menge des erhaltenen Gemisches aus Vorpolymerisat und Katalysatorbestandteilen [g] | 1,15 | 1,59 | 2,79 | 3,46 | 2,54 |
| Atomares Verhältnis Aluminium: Zirkonium in dem nach der Vorpolymerisation C erhaltenen Gemisch | 124 | 968 | 2060 | 683 | 845 |
| Zirkoniumgehalt im Gemisch [Gew.-%] | 0,091 | 0,067 | 0,031 | 0,047 | 0,046 |
| Aluminiumgehalt im Gemisch [Gew.-%] | 6,6 | 19,2 | 18,9 | 9,5 | 11,5 |
| Partikelgröße der Hauptfraktion des Gemisches [μ] | 80-130 | 80-130 | 250-330 | 80-130 | 30-50 |
| Anteil der Hauptfraktion des Gemisches [%] | 86 | 64 | 72 | 40 | 73 |

D. Polymerisation

In einem 1l-Rührautoklaven wurden zunächst 500 ml Heptan vorgelegt und in diese Lösung 1,3 ml der aus dem Vorpolymerisationsschritt C erhaltenen Suspension und 2 ml einer Lösung von 10 g Methylalumoxan (durchschnittliche Kettenlänge m = 20) in 100 ml Toluol eingebracht. Anschließend wurde bei einer Temperatur von 60°C und unter einem Druck von 5 bar in den Rührautoklaven Ethylen eingeleitet und dieses 45 Minuten lang polymerisiert.

Die Menge des in der Suspension vorliegenden Gemisches aus Vorpolymerisat und aktiviertem Katalysatorsystem, die Ausbeute an Polyethylen und die Produktivität des Katalysators (Menge des erhaltenen Polymerisats, bezogen auf

die Menge des insgesamt verwendeten Katalysatorsystems),könnenebenso wie das Gewichtsmittel ($\overline{M}_w$) und das Zahlenmittel ($\overline{M}_n$) der Molmassen der dabei erhaltenen Polyethylene sowie deren Partikelgröße der nachfolgenden Tabelle 2 entnommen werden.

Tabelle 2

| | Beispiele | | |
|---|---|---|---|
| | 1 | 2 | 3 |
| Menge des in der Suspension vorliegenden Gemisches aus Vorpolymerisat und Katalysatorsystem [mg] | 50 | 96 | 49 |
| Ausbeute an Polyethylen [g] | 25,8 | 21,9 | 9,7 |
| Produktivität des Katalysators [g Polyethylen/g Katalysatorsystem aus Zirkoniumkomplex und Methylalumoxan] | 516 | 228 | 198 |
| Gewichtsmittel [$\overline{M}_w$] des erhaltenen Polyethylens | 139500 | 141000 | 135700 |
| Zahlenmittel [$\overline{M}_n$] des erhaltenen Polyethylens | 71200 | 70000 | 62800 |
| Molmassenverteilung [$\overline{M}_w/\overline{M}_n$] | 2,0 | 2,0 | 2,2 |
| Partikelgröße der Hauptfraktion des erhaltenen Polyethylens [μ] | 300-380 | 250-350 | 380-460 |
| Anteil der Hauptfraktion des erhaltenen Polyethylens [%] | 90 | 71 | 65 |

Aus den Beispielen wird ersichtlich, daß sich die erfindungsgemäßen Katalysatorsysteme insbesondere zur Herstellung von Polyalk-1-enen mit einer engen Molmassenverteilung und einer engen Korngrößenverteilung (hoher Anteil der Hauptfraktion bei der Partikelgrößenbestimmung) eignen.

**Patentansprüche**

**1.** Katalysatorsysteme zur Polymerisation von $C_2$- bis $C_{10}$-Alk-1-enen enthaltend als aktive Bestandteile Metallocenkomplexe von Metallen der IV. und V. Nebengruppe des Periodensystems und eine oligomere Aluminiumoxidverbindung, erhältlich durch Vermischen eines oder mehrerer Metallocenkomplexe von Metallen der IV. und V. Nebengruppe des Periodensystems mit einer Lösung der oligomeren Aluminiumoxidverbindung in einem inerten Kohlenwasserstoff für einen Zeitraum von 5 bis 120 Minuten, anschließende Ausfällung des so aktivierten Katalysatorsystems mit Hilfe eines inerten, flüssigen Kohlenwasserstoffs, welcher zusätzlich einen Viskositätsverbesserer enthält, unter Erhalt einer Suspension und anschließende Trägerung der so erhältlichen Katalysatorsysteme durch kurzzeitige Vorpolymerisation eines $C_2$- bis $C_{10}$-Alk-1-ens bei Temperaturen von -60 bis 20°C.

**2.** Katalysatorsysteme nach Anspruch 1, dadurch gekennzeichnet, daß die Metallocenkomplexe von Metallen der IV. und V. Nebengruppe des Periodensystems Cyclopentadienyl- oder Indenylkomplexe von Titan, Zirkonium, Hafnium oder Vanadium sind.

**3.** Katalysatorsysteme nach den Ansprüchen 1 oder 2, erhältlich durch Vermischen der Metallocenkomplexe von Metallen der IV. und V. Nebengruppe des Periodensystems mit einer Lösung der oligomeren Aluminiumoxidverbindung in einem inerten Kohlenwasserstoff für einen Zeitraum von 10 bis 60 Minuten.

**4.** Katalysatorsysteme nach den Ansprüchen 1 bis 3, dadurch gekennzeichnet, daß der inerte flüssige Kohlenwasserstoff ein $C_5$- bis $C_{12}$-Alkan ist.

**5.** Katalysatorsysteme nach den Ansprüchen 1 bis 4, dadurch gekennzeichnet, daß der Viskositätsverbesserer Polyisobutylen ist.

**6.** Katalysatorsysteme nach den Ansprüchen 1 bis 5, dadurch gekennzeichnet, daß die Vorpolymerisation bei Temperaturen von -50 bis 0°C durchgeführt wird.

**7.** Verfahren zur Herstellung von Katalysatorsystemen zur Polymerisation von $C_2$- bis $C_{10}$-Alk-1-enen gemäß den Ansprüchen 1 bis 6, wobei man zunächst ein oder mehrere Metallocenkomplexe von Metallen der IV. und V. Nebengruppe des Periodensystems mit einer Lösung einer oligomeren Aluminumoxidverbindung in einem inerten Kohlenwasserstoff für einen Zeitraum von 5 bis 120 Minuten miteinander vereinigt, dadurch gekennzeichnet, daß man

anschließend das dadurch aktivierte Katalysatorsystem durch Ausfällung mit Hilfe eines inerten, flüssigen Kohlenwasserstoffs, welcher zusätzlich einen Viskositätsverbesserer enthält, in eine Suspension überführt und danach die dadurch erhältlichen Katalysatorsysteme durch kurzzeitige Vorpolymerisation eines $C_2$- bis $c_{10}$-Alk-1-ens bei Temperaturen von -60 bis 20°C trägert.

**8.** Verwendung der Katalysatorsysteme gemäß den Ansprüchen 1-6 zur Herstellung von Polyalk-1-enen.

**9.** Verfahren zur Herstellung von Polymerisaten von C2- bis $C_{10}$-Alk-1-enen bei Drücken von 0,1 bis 100 bar und Temperaturen von -20 bis 150°C mit Hilfe eines Katalysatorsystems bestehend aus Metallocenkomplexen von Metallen der IV. und V. Nebengruppe des Periodensystems und einer oligomeren Aluminumoxidverbindung, dadurch gekennzeichnet, daß man Katalysatorsysteme gemäß den Ansprüchen 1 bis 6 verwendet.

## Claims

**1.** A catalyst system for the polymerization of $C_2$to $C_{10}$-alk-1-enes which contains, as active constituents, metallocene complexes of metals from sub-groups IV and V of the Periodic Table and an oligomeric aluminum oxide compound and is obtainable by mixing one or more metallocene complexes of metals from sub-groups IV and V of the Periodic Table with a solution of the oligomeric aluminum oxide compound in an inert hydrocarbon for from 5 to 120 minutes, subsequently precipitating the thus-activated catalyst system with the aid of an inert, liquid hydrocarbon which additionally contains a viscosity improver, to give a suspension, and subsequently supporting the resultant catalyst system by briefly prepolymerizing a $C_2$- to $C_{10}$-alk-1-ene at from -60 to 20°C.

**2.** A catalyst system as claimed in claim 1, wherein the metallocene complexes of metals from sub-groups IV and V of the Periodic Table are cyclopentadienyl or indenyl complexes of titanium, zirconium, hafnium or vanadium.

**3.** A catalyst system as claimed in claim 1 or 2, obtainable by mixing metallocene complexes of metals from sub-groups IV and V of the Periodic Table with a solution of the oligomeric aluminum oxide compound in an inert hydrocarbon for from 10 to 60 minutes.

**4.** A catalyst system as claimed in any of claims 1 to 3, wherein the inert liquid hydrocarbon is a $C_5$- to $C_{12}$-alkane.

**5.** A catalyst system as claimed in any of claims 1 to 4, wherein the viscosity improver is polyiso-butylene.

**6.** A catalyst system as claimed in any of claims 1 to 5, wherein the prepolymerization is carried out at from -50 to 0°C.

**7.** A process for the preparation of a catalyst system for the polymerization of $C_2$- to $C_{10}$-alk-1-enes as claimed in any of claims 1 to 6, in which one or more metallocene complexes of metals from sub-groups IV and V of the Periodic Table are first combined with a solution of an oligomeric aluminum oxide compound in an inert hydrocarbon for from 5 to 120 minutes, which comprises subsequently converting the thus-activated catalyst system into a suspension by precipitation with the aid of an inert, liquid hydrocarbon which additionally contains a viscosity improver, and then supporting the resultant catalyst system by briefly prepolymerizing a $C_2$-to $C_{10}$-alk-1-ene at from -60 to 20°C.

**8.** The use of a catalyst system as claimed in any of claims 1 to 6 for the preparation of polyalk-1-enes.

**9.** A process for the preparation of polymers of $C_2$- to $C_{10}$-alk-1-enes at from 0.1 to 100 bar and at from -20 to 150°C with the aid of a catalyst system comprising metallocene complexes of metals from sub-groups IV and V of the Periodic Table and an oligomeric aluminum oxide compound, which comprises using a catalyst system as claimed in any of claims 1 to 6.

## Revendications

**1.** Systèmes catalytiques pour la polymérisation d'alcènes-1 en $C_2$-$C_{10}$, contenant, comme constituants actifs, des complexes de type métallocéne de métaux des groupes IVB et VB de la classification périodique et un composé oligomère d'oxyde d'aluminium, obtenus par mélange d'un ou de plusieurs complexes de type métallocéne de métaux des groupes IVB et VB de la classification périodique avec une solution du composé oligomère d'oxyde d'aluminium dans un hydrocarbure inerte pendant une période de 5 à 120 min, suivi de précipitation du système

catalytique ainsi activé à l'aide d'un hydrocarbure liquide inerte qui contient en plus un agent améliorant la viscosité, pour obtenir une suspension, puis par fixation sur support des systèmes catalytiques ainsi obtenus par une brève prépolymérisation d'un alcène-1 en $C_2$-$C_{10}$ à une température de -60 à 20°C.

**2.** Systèmes catalytiques selon la revendication 1, caractérisés en ce que les complexes de type métallocène de métaux des groupes IVB et VB de la classification périodique sont des complexes de cyclopentadiényle ou d'indényle de titane, de zirconium, de hafnium ou de vanadium.

**3.** Systèmes catalytiques selon la revendication 1 ou 2, obtenus par mélange des complexes de type métallocène de métaux des groupes IVB et VB de la classification périodique avec une solution du composé oligomère d'oxyde d'aluminium dans un hydrocarbure inerte pendant une période de 10 à 60 min.

**4.** Systèmes catalytiques selon l'une quelconque des revendications 1 à 3, caractérisés en ce que l'hydrocarbure liquide inerte est un alcane en $C_5$-$C_{12}$.

**5.** Systèmes catalytiques selon l'une quelconque des revendications 1 à 4, caractérisés en ce que l'agent améliorant la viscosité est un polyisobutylène.

**6.** Systèmes catalytiques selon l'une quelconque des revendications 1 à 5, caractérisés en ce que la prépolymérisation est conduite à une température de -50 à 0°C.

**7.** Procédé de préparation de systèmes catalytiques pour la polymérisation d'alcènes-1 en $C_2$-$C_{10}$ selon l'une quelconque des revendications 1 à 6, dans lequel on commence par combiner un ou plusieurs complexes de type métallocène de métaux des groupes IVB et VB de la classification périodique avec une solution d'un composé oligomère d'oxyde d'aluminium dans un hydrocarbure inerte pendant une période de 5 à 120 min, caractérisé en ce que l'on transforme ensuite en une suspension le système catalytique ainsi activé par précipitation à l'aide d'un hydrocarbure liquide inerte qui contient en plus un agent améliorant la viscosité, après quoi on fixe sur support les systèmes catalytiques ainsi obtenus par une brève prépolymérisation d'un alcène-1 en $C_2$-$C_{10}$ à une température de -60 à 20°C.

**8.** Utilisation des systèmes catalytiques selon l'une quelconque des revendications 1 à 6, pour la préparation de polyalcènes-1.

**9.** Procédé de préparation de polymères d'alcènes-1 en $C_2$-$C_{10}$ sous des pressions de 0,1 à 100 bar et à des températures de -20 à 150°C, à l'aide d'un système catalytique se composant de complexes de type métallocéne de métaux des groupes IVB et VB de la classification périodique et d'un composé oligomère de l'oxyde d'aluminium, caractérisé en ce que l'on utilise des systèmes catalytiques selon l'une quelconque des revendications 1 à 6.